# FASCICULE DE BREVET EUROPEEN

(11) **EP 1 903 746 B1**
(45) Date de publication et mention de la délivrance du brevet: **27.02.2013**
(21) Numéro de dépôt: 07291074.8
(22) Date de dépôt: 06.09.2007
(51) Int. Cl.: H04L 29/06

(54) **Procédé de sécurisation de sessions entre un terminal radio et un équipement dans un réseau**
Verfahren zur Sicherung von Sitzungen zwischen einem Funkendgerät und einer Einrichtung in einem Netz
Method of securing sessions between a radio terminal and a device in a network

(30) Priorité: 19.09.2006 FR 0608182
(43) Date de publication de la demande: 26.03.2008
(73) Titulaire: Société Française du Radiotéléphone, 75008 Paris (FR)
(72) Inventeur: Bensimon, Michael, 94220 CHARENTON LE PONT (FR); Caloud, Philippe, 38330 Saint-Ismier (FR)
(74) Mandataire: Debay, Yves

(56) Documents cités:
- EP-A- 1 530 339
- WO-A-2005/109146
- OMA: "DRM Architecture Approved Version 2.0 - 03 Mar 2006 Open Mobile Alliance OMA-AD-DRM-V2_0-20060303-A" OMA STANDARD, [Online] 3 mars 2006 (2006-03-03), XP002439607 Extrait de l'Internet: URL:http://www.openmobilealliance.org/rele ase_program/docs/DRM/V2_0-20060303-A/OMA-A D-DRM-V2_0-20060303-A.pdf> [extrait le 2007-06-27]
- OMA: "DRM Specification Approved Version 2.0 ? 03 Mar 2006 - OMA-TS-DRM-DRM-V2_0-20060303-A" OMA STANDARD, [Online] 3 mars 2006 (2006-03-03), XP002439609 Extrait de l'Internet: URL:http://www.openmobilealliance.org/rele ase_program/docs/DRM/V2_0-20060303-A/OMA-T S-DRM-DRM-V2_0-20060303-A.pdf> [extrait le 2007-06-26]

## Description

La présente invention concerne le domaine de la radiotéléphonie mobile. La présente invention concerne plus particulièrement un procédé permettant d'établir une session sécurisée entre un terminal de radiocommunication et un équipement dans un réseau.

Dans ce qui suit, on entendra par terminal tout équipement émetteur récepteur portatif, portable, susceptible de fonctionner sur un réseau de radiotéléphonie mobile tel que GSM, GPRS, UMTS, CDMA et tout type de réseau analogue, par exemple WLAN (Wireless Local Area Network).

Dans l'art antérieur, le problème de la sécurisation des échanges et des infrastructures de traitement de l'information a été abordé depuis longtemps. Jusqu'à présent, de nombreuses solutions ont été proposées, qui reposent sur des technologies de cryptographie connues. L'infrastructure de gestion de clés publiques en particulier (PKI pour "Public Key Infrastructure") est la solution reposant sur des technologies de clés asymétriques (publique Kp, privée Ks) qui est la plus développée. Une clé publique Kp correspond à une suite de chiffres utilisée pour chiffrer ou déchiffrer un message transmis entre un émetteur et un récepteur et associé à une clé secrète appairée, appelée également clé privée Ks. Le message peut ainsi être chiffré par une clé publique, connue d'un ensemble d'utilisateurs, et déchiffré par une clé secrète connue du seul récepteur ou inversement chiffré par une clé privée Ks et déchiffré par la clé publique. Tandis que le chiffrement par clé publique Kp assure la confidentialité du message, le chiffrement par clé privée Ks en assure l'intégrité.

Cette solution prévoit, pour l'initialisation d'un échange sécurisé ou d'un accès à un contenu sécurisé, d'utiliser des clés de cryptage publiques Kp, garantissant que seul le détenteur de la clé privée Ks associée pourra décrypter le message et des certificats associant de manière sûre l'identité du partenaire à la clé publique Kp, car certifiée (cryptée par clé privée Ks) par une autorité de certification AUC (sigle pour "Authentification Centre").

De manière connue, le centre d'authentification AUC assure l'authentification des abonnés et participe à la confidentialité des données transitant dans l'interface radio entre le terminal mobile et la station de base auquel il est rattaché à un instant donné.

Néanmoins, la solution susmentionnée n'est pas entièrement sûre. Ainsi, l'initialisation du processus d'authentification est un point faible car il y a beaucoup d'autorités de certification dont les politiques de certification n'ont absolument pas le même degré de sûreté. L'utilisateur moyen n'a pas connaissance de cela et ne sait pas par exemple qu'il peut être très risqué d'accepter des certificats certifiés par certaines autorités.

Par ailleurs, le stockage des clés privées Ks s'avère problématique, surtout dans le cas où il peut être de l'intérêt de l'utilisateur de connaître cette clé pour avoir accès à du contenu protégé. La protection de contenu contre le piratage doit en effet être adaptée dans le cas où "l'attaquant" n'est pas extérieur, mais est typiquement l'utilisateur lui-même. La plupart des solutions existantes ne prennent pas en compte cette possibilité.

Il est prévu dans l'art antérieur une sécurisation des mécanismes de distribution de contenus digitaux. Ainsi, l'accès à un contenu peut être protégé par des droits d'accès, par exemple avec des technologies de type DRM ("Digital Rights Management"). La sécurisation passe, dans les versions avancées (par exemple la norme OMA DRM v2 de l'organisme « Open Mobile Alliance »), par l'initialisation et le stockage de clés privées/certificats dans les terminaux. Ce type de sécurisation est adapté à la distribution de contenus via les réseaux de téléphonie mobile. De plus, des architectures ou mécanismes spécifiques sont mis en oeuvre dans les diverses formes de réalisation des terminaux mobiles disponibles sur le marché, pour limiter les risques de piratage de clés privées propres aux terminaux mobiles.

Typiquement, les modes de distribution de contenus sécurisés mettent en oeuvre des mécanismes qui vont permettre de distribuer de manière sécurisée des droits d'utilisation du contenu protégé (contenu DRM) ainsi que des clés permettant de décrypter des contenus. Dans les spécifications « DRM Spécification » Approved Version 2.0 - 03 Mars 2006 OMA-TS-DRM-DRM-V2_0-20060303-A, on retrouve des exemples de délivrance de ces droits d'utilisation RO (« Right Objets »).

Pour l'établissement de sessions sécurisées entre le terminal et un équipement "cible" doté de ressources du réseau, on trouve aussi différents mécanismes de sécurité :
- dans le domaine GSM/UMTS, les terminaux mobiles sont équipés d'un élément de sécurité, la carte (U)SIM, qui permet d'identifier et d'authentifier un abonné grâce à un couple identifiant - clé symétrique (IMSI - Ki) ;
- dans la mise en oeuvre d'un réseau privé VPN (Virtual Private Network), la présence d'une clé privée et d'un certificat sur un terminal est couramment utilisée pour établir une session sécurisée entre le terminal et un équipement ;
- dans le domaine des fournisseurs d'accès à Internet, une relation de sécurité est souvent établie pour interconnecter, en WiFi par exemple, un équipement d'accès (communément appelé le boîtier « box ») et un terminal.

Un inconvénient de ces méthodes de sécurisation est la nécessité de réaliser des procédures de configuration/initialisation fastidieuses afin que les caractéristiques spécifiques du terminal soient bien prises en compte pour la session. Il existe donc un besoin pour une méthode sécurisation garantissant une authentification forte des terminaux lors de l'établissement de sessions/connexions et permettant de s'affranchir de la maîtrise de composants comme une carte (U)SIM ou encore de s'affranchir des procédures de configurations fastidieuses telles que celles mises en oeuvre pour un réseau privé VPN ou encore pour l'établissement d'une liaison sécurisée avec un boîtier « box ».

La présente invention a pour objet de supprimer un ou plusieurs des inconvénients de l'art antérieur en définissant un procédé combinant une authentification sûre des terminaux et une simplicité pour établir une demande de connexion auprès d'un équipement (que cet équipement soit un serveur ou encore un boîtier de connexion (par exemple une box de type ADSL ou analogue) permettant l'accès à des serveurs, à un réseau ou à certaines adresses URL).

A cet effet, l'invention concerne un procédé d'établissement d'une session sécurisée entre un terminal radio et un équipement interconnectés via un réseau, caractérisé en ce qu'il comprend :
- une étape préalable d'enregistrement du terminal auprès d'un serveur distributeur de droits d'utilisation dans des objets de droits, l'étape d'enregistrement permettant au serveur d'enregistrer des données d'identification du terminal et de fournir au terminal des éléments d'adaptation à des conditions de communication avec le serveur,
- une distribution d'un secret à utiliser par le terminal pour établir la session ainsi qu'un envoi de droits d'utilisation au terminal, les droits d'utilisation envoyés comportant des permissions d'accéder à l'équipement, le procédé utilisant un système d'authentification, en liaison avec le serveur distributeur de droits d'utilisation, pour identifier le terminal et générer ledit secret, avant l'établissement entre le terminal et le serveur d'une communication spécifique pour permettre d'accéder à l'équipement.

Le procédé selon l'invention propose donc avantageusement d'utiliser des éléments de sécurité mis en oeuvre pour la gestion de contenu sécurisé sur les terminaux afin de permettre l'établissement de sessions/connexions sécurisées entre un terminal et un équipement. Le procédé permet ainsi de garantir une authentification forte des terminaux lors de l'établissement de sessions/connexions tout en évitant de configurer dès l'initialisation du terminal des secrets/éléments de sécurité dont on se servira rarement, voire jamais. L'authentification est forte car elle reprend les éléments/mécanismes de sécurité mis en oeuvre pour le DRM : par exemple un microcircuit (puce) de sécurité dédié embarqué dans le terminal avec un OS du terminal durci.

Selon une autre particularité, le procédé comprend pour établir la session :
- une étape d'identification du terminal par le système d'authentification en liaison avec le serveur, par utilisation de données d'identification et de données d'autorisation du terminal ;
- une étape de génération, par le système d'authentification, d'une clé de session en cas de succès de l'étape d'identification du terminal, suivie d'une étape de réception par le terminal de la clé de session ;
- une étape de génération par le serveur d'un objet de droits protégé par des moyens distincts de la clé de session, l'objet de droits encapsulant des droits d'utilisation qui prennent en compte des caractéristiques du terminal identifiées à l'aide des données d'identification ;
- une étape de communication entre le terminal et ledit serveur, dans laquelle le serveur délivre au terminal l'objet de droits ;
- une étape d'accès à l'équipement par le terminal, par utilisation d'une part de la clé de session générée par le système d'authentification, et d'autre part des droits d'utilisation contenus dans l'objet de droits délivré par le serveur.

Selon une autre particularité, le procédé comprend une étape de stockage de données d'identification du terminal dans des moyens de mémorisation à la disposition du système d'authentification.

Selon une autre particularité, l'étape de génération par le serveur d'un objet de droits est réalisée suivant les spécifications DRM du standard OMA V2.

Ainsi, le contenu distribué pour permettre l'accès à l'équipement peut être distribué notamment sous la forme d'un objet crypté DCF protégé par un objet de droits ou « rights object » RO au sens du standard OMA V2 et ce contenu n'est accessible qu'à l'utilisateur du terminal radio. On comprend que, grâce au procédé selon l'invention, les mécanismes d'authentification et de cryptage du DRM (standard OMA V2) sont mis en oeuvre de manière inédite afin d'échanger un ou plusieurs secrets permettant l'établissement d'une ou plusieurs sessions ou connexions sécurisées entre un ou plusieurs terminal(aux) et un ou plusieurs équipements.

Selon une autre particularité, l'étape d'identification du terminal par le système d'authentification est suivie d'une étape de communication entre le système d'authentification et ledit serveur, dans laquelle le système d'authentification transmet au serveur un identifiant unique de connexion rattaché au terminal.

Selon une autre particularité, ladite étape de communication entre le terminal et ledit serveur est initiée par une étape de requête du terminal auprès du serveur pour obtenir un objet de droits protégé par un cryptage dont la clef est associée au terminal.

Selon une autre particularité, ladite étape de communication entre le terminal et ledit serveur est initiée unilatéralement par le serveur pour délivrer un objet de droits protégé et associé au terminal.

Selon une autre particularité, ladite étape de communication entre le terminal et ledit serveur d'authentification est initiée par une étape de requête du terminal auprès du serveur d'authentification.

Selon une autre particularité, ladite étape de communication entre le terminal et ledit serveur d'authentification est initiée unilatéralement par le serveur d'authentification pour délivrer un objet crypté au terminal.

Selon une autre particularité, l'étape de communication entre le terminal et un serveur DRM Proxy est initiée par une étape de requête du terminal auprès du serveur DRM Proxy.

Selon une autre particularité, l'étape de communication entre le terminal et le ledit serveur DRM Proxy est initiée unilatéralement par le serveur DRM Proxy pour délivrer un objet crypté (DCF) et un objet de droits (RO).

Selon une autre particularité, le procédé selon l'invention comporte une étape de décryptage de l'objet de droits et de l'objet crypté DCF au niveau du terminal, par un module cryptographique du terminal qui a été identifié par le serveur lors de l'étape d'enregistrement.

Selon une autre particularité, le procédé comprend une étape de communication entre le système d'authentification et ledit serveur, dans laquelle le système d'authentification transmet au moins une clé de cryptage/décryptage au serveur.

Selon une autre particularité, l'objet crypté DCF délivré par le serveur d'authentification et l'objet de droits RO délivré par le serveur sont reçus par le terminal et traités par un agent de gestion de droits digitaux DRM (adapté au standard DRM OMA V2), l'étape d'accès à l'équipement étant réalisée après un décryptage de l'objet crypté DCF grâce à l'utilisation de l'objet de droits associé au terminal et une utilisation d'un module de connexion du terminal pour s'authentifier auprès de l'équipement.

Selon une autre particularité, le serveur d'authentification insère dans l'objet crypté DCF délivré au terminal au moins une clé de cryptage/décryptage.

Selon une autre particularité, le système d'authentification transmet à l'équipement une adresse de ressource URL d'un serveur secondaire fournisseur d'objets porteurs de clé de session, en format DCF, de façon à ce qu'un module de connexion du terminal puisse requérir auprès de ce serveur secondaire l'objet en format DCF (porteur de la clé de session) qui permet au terminal d'accéder à l'équipement, la clé de session étant récupérée en clair au niveau du terminal, après utilisation par un agent de gestion de droits digitaux DRM du terminal de la clé de cryptage/décryptage.

Selon une autre particularité, le système d'authentification transmet à l'équipement une adresse de ressource URL du serveur pour permettre au terminal d'effectuer ladite étape d'enregistrement en utilisant cette adresse de ressource URL lors d'une demande de connexion effectuée auprès de l'équipement.

Selon une autre particularité, le terminal reçoit avec l'objet de droits (Right Objet) des modalités d'utilisation de la clé de session (contenue dans le DCF), par exemple, des données de spécification d'une durée de validité de la clé de session, ou d'un nombre limite d'utilisations de la clé de session.

Selon une autre particularité, le serveur d'authentification récupère les caractéristiques du terminal lors de l'étape de génération de l'objet crypté DCF pour déterminer et indiquer dans l'objet crypté un type de session le plus approprié à l'équipement et au terminal.

Selon une autre particularité, le procédé comprend une étape d'appareillage du terminal et d'un boîtier de connexion au réseau ou autre terminal communiquant avec le réseau pour appareiller ainsi plusieurs terminaux en domaines et une étape de partage de l'objet crypté (DCF) généré par le système d'authentification et de ses modalités d'utilisation présentées dans l'objet de droits (RO).

Un autre but de l'invention est de permettre l'établissement d'une session avec un équipement d'un réseau de radiotéléphonie par utilisation dans le terminal de radiocommunication d'un programme apte à recueillir les données nécessaires et assurant une authentification sûre du terminal.

A cet effet, l'invention concerne un programme de calculateur chargeable directement dans une mémoire interne d'une unité de traitement numérique localisée dans un terminal de radiocommunication apte à communiquer avec un réseau de radiotéléphonie, le terminal comprenant des moyens de stockage de données d'identification du terminal, caractérisé en ce qu'il comprend des portions de codes de logiciel pour l'exécution des étapes suivantes lorsque ledit programme est exécuté par l'unité de traitement numérique :
- délivrer et transmettre les données d'identification, pour permettre au terminal de s'identifier auprès d'un système d'authentification du réseau,
- recevoir un objet de droits issu d'un serveur distributeur de droits d'utilisation protégés,
- recevoir un objet crypté issu d'un serveur d'authentification distributeur de secrets d'authentification,
- déclencher un décryptage par un agent de gestion de droits digitaux DRM de l'objet crypté à l'aide de l'objet de droits,
- extraire de l'objet crypté des droits d'utilisation comportant des permissions d'accéder à un équipement du réseau ;
- extraire des données reçues via le réseau au moins un secret généré par le système d'authentification, par utilisation de l'agent DRM,
- utiliser ledit secret (comme clé de session) et les droits d'utilisation pour établir une session sécurisée entre le terminal radio et l'équipement du réseau.

L'invention, avec ses caractéristiques et avantages, ressortira plus clairement à la lecture de la description faite en référence aux dessins annexés donnés à titre d'exemples non limitatifs dans lesquels :
- la figure 1 représente un premier exemple de déroulement du procédé selon l'invention,
- la figure 2 illustre un deuxième exemple de déroulement du procédé selon l'invention,
- la figure 3 représente schématiquement un mode de réalisation de l'obtention par le terminal des secrets requis pour l'établissement d'une session sécurisée avec un équipement du réseau.

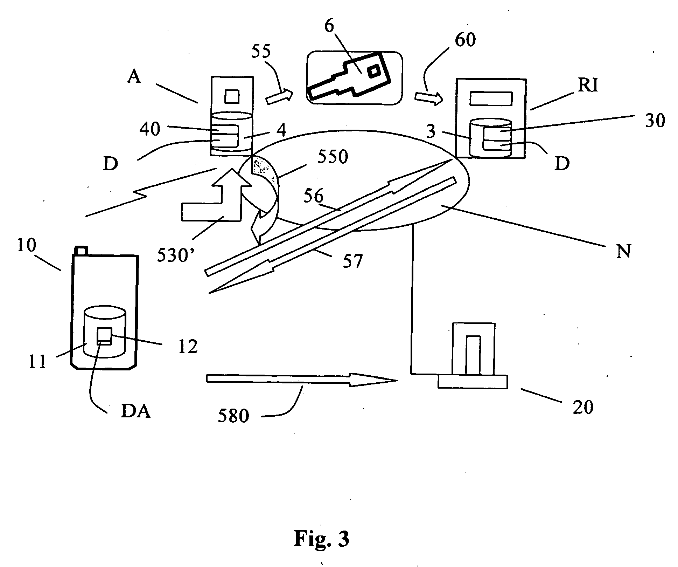

En référence à la figure 3, le terminal (10) de radiocommunication peut être équipé d'un agent DRM qui assure un niveau élevé de sécurité. Cet agent DRM peut avantageusement être entièrement conforme à la norme OMA (Open Mobile Alliance) version 2 et inclut au moins un module cryptographique (12). Dans un mode de réalisation de l'invention, l'agent DRM supporte des modèles d'utilisation flexibles, tels que le partage de contenu. Il peut permettre la fourniture et la gestion sécurisées de contenu tel que la musique et la vidéo dans le domaine mobile. Avantageusement, cet agent DRM peut être utilisé par un programme ou module de connexion du terminal (10) chargé d'exploiter les secrets et les droits d'utilisation recueillis via le réseau (N), ce programme permettant ainsi de gérer l'établissement de la session sécurisée entre le terminal radio (10) et l'équipement (20).

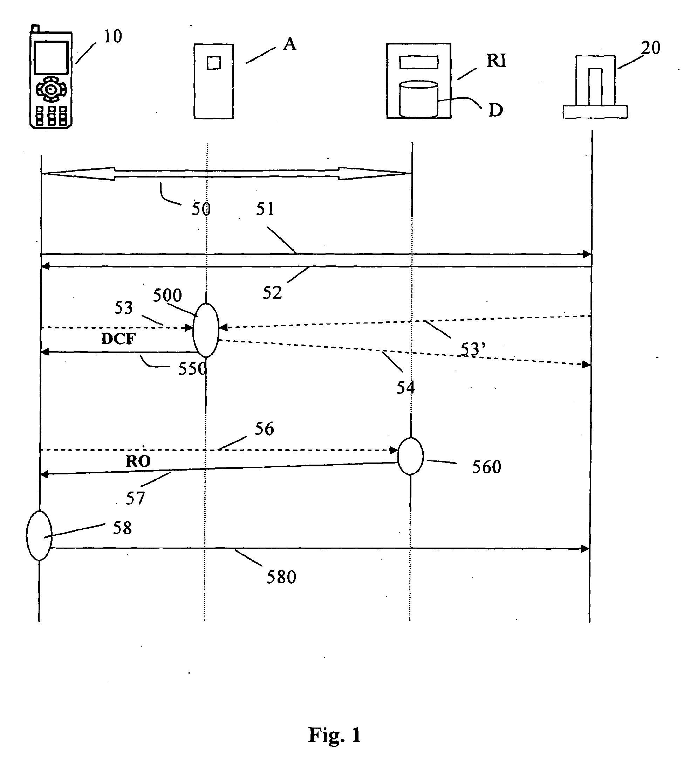

L'invention va à présent être décrite en liaison avec les figures 1, 2 et 3.

L'étape (50) d'enregistrement du terminal (10) auprès du serveur (RI) distributeur de droits d'utilisation permet au serveur (RI) d'enregistrer des données (D) d'identification du terminal (10). Le serveur (RI) gère ainsi une liste de terminaux radio (10) préalablement enregistrés afin que ces derniers puissent recevoir des droits d'utilisations issus de ce serveur (RI). L'étape (50) d'enregistrement permet également d'adapter le terminal (10) à des conditions de communication avec le serveur (RI), par fourniture au terminal d'éléments d'adaptation : la configuration du terminal (10) peut ainsi être ajustée, le serveur pouvant s'adapter également aux modalités de communication permettant de réaliser des échanges avec le terminal (10). L'Open Mobile Alliance (OMA) définit un mode nommé «4-th path registration protocol» qui permet au terminal (10) de s'enregistrer auprès d'un serveur (RI) appelé "Right Issuer". A l'issue de cette phase, le terminal (10) est en mesure d'obtenir de manière sécurisée des secrets, par le biais par exemple d'une information protégeant un contenu sensible, appelée DCF selon la norme OMA V2. Dans le procédé de l'invention, les mécanismes de lecture d'objets cryptés (DCF) peuvent être utilisés non pas pour accéder à du contenu protégé (ce contenu étant véhiculé dans l'information DCF) mais pour transmettre des données (par exemple un secret et un identifiant) permettant d'établir une session sécurisée avec au moins un équipement (20). Les conditions de communication comportent par exemple, comme indiqué dans la spécification DRM de l'alliance OMA (Version 2), les paramètres de protocole, la version de protocole à utiliser, les algorithmes cryptographiques, les préférences d'échange de certificat, l'échange optionnel de certificats, l'authentification mutuelle du terminal (10) et du serveur (RI), la protection de l'intégrité des messages de protocole et la synchronisation temporelle d'un dispositif DRM optionnel.

Ces diverses conditions de communication sont connues en soi par l'homme du métier (cf. "DRM Spécification » Approved Version 2.0 - 03 Mar 2006, OMA) et ne seront pas détaillées ici.

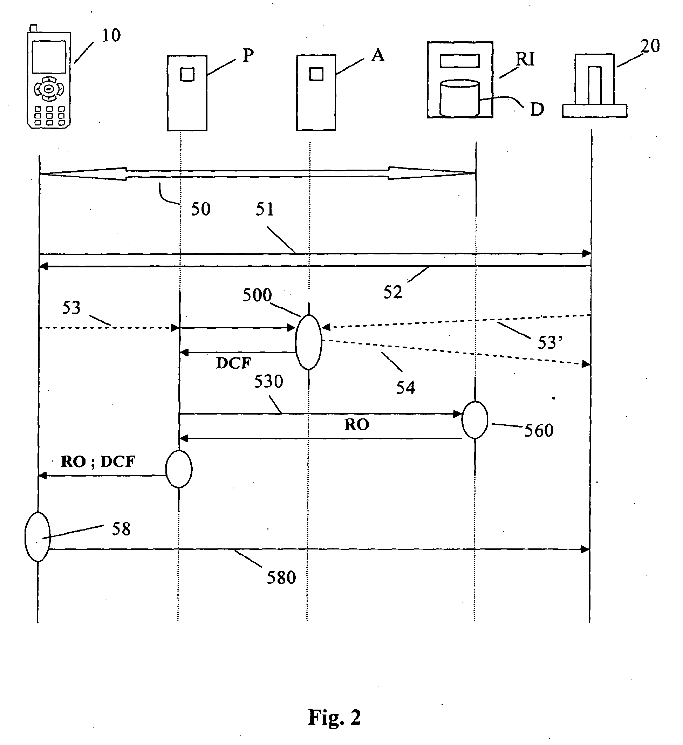

Pour permettre l'établissement d'une session sécurisée entre un terminal radio (10) et un équipement (20) interconnectés via un réseau (N), le procédé comprend, comme illustré notamment aux figures 1 et 2 :
- l'étape préalable (50) d'enregistrement du terminal (10) auprès du serveur (RI) distributeur de droits d'utilisation dans des objets de droits (RO),
- une distribution d'un secret à utiliser par le terminal (10) pour établir la session ainsi qu'un envoi de droits d'utilisation au terminal (10), les droits d'utilisation envoyés comportant des permissions d'utiliser le secret et donc d'accéder à l'équipement (20), et
- l'utilisation spécifique d'un système d'authentification (A), en liaison avec le serveur (RI) distributeur de droits d'utilisation, pour identifier le terminal (10) et générer ledit secret.

On comprend que le serveur (RI) est en charge, d'enregistrer le terminal (10) et de lui distribuer des objets de droits (RO). Le système d'authentification (A) est donc chargé de générer le secret qui permettra d'authentifier le terminal (10) lors de sa session/connexion à l'équipement (20) et de distribuer le secret au terminal via un DCF. Le secret peut consister en une clé de session, qui peut aussi être distribuée à l'équipement (20) par le système d'authentification (A), dans une étape optionnelle (54). On peut aussi prévoir dans cette étape (54) optionnelle de distribuer une clé publique associée au secret fourni au terminal (10). Dans ce qui suit, on entend par clé de session une clé privée Kc, d'un processus de cryptage asymétrique ou non, ou toutes autres données secrètes analogues permettant d'établir une session/connexion sécurisée.

Par rapport aux mécanismes DRM du standard OMA V2, le procédé selon l'invention permet de réutiliser les éléments de sécurité (du terminal et du réseau (RI et éventuellement serveur Proxy DRM P) mis en oeuvre pour la gestion de contenu sécurisé sur les terminaux afin de permettre l'établissement de sessions/connexions sécurisées entre le terminal (10) et un équipement (20). Il permet ainsi de garantir une authentification forte des terminaux lors de l'établissement de sessions/connexions tout en s'affranchissant de la maîtrise de composants comme une carte (U)SIM ou encore en s'affranchissant des procédures de configuration fastidieuses telles que celles mises en oeuvre pour un réseau VPN ou encore pour l'établissement d'une liaison sécurisée avec un boîtier « box ».

Dans un mode de réalisation de l'invention, l'établissement de la session/connexion sécurisée entre l'équipement (20) et le terminal (10) de radiocommunication requérant s'appuie sur les mécanismes d'authentification prévus dans la norme OMA DRM v2, afin d'identifier ou d'authentifier le terminal (10) et de lui distribuer un secret, par exemple une clé de session Kc, ainsi qu'éventuellement des données additionnelles comme par exemple une durée de validité de ladite clé Kc permettant d'établir la session/connexion sécurisée. Le système d'authentification (A) peut aussi mettre en oeuvre, alternativement ou en addition, un mécanisme pour restreindre l'utilisation des secrets à un nombre limité de fois.

En référence à la figure 2, on comprend que le terminal (10) peut recevoir simultanément, à travers un serveur DRM Proxy P, un objet de droit (RO) généré par le serveur (RI) lors de l'étape (560) ainsi qu'un objet crypté (DCF) généré par le serveur d'authentification (A) lors d'une étape (500) de génération avec mise en forme de l'objet crypté (DCF) qui encapsule la clé de session concernant la session entre le terminal (10) et l'équipement (20). Un avantage de délivrer le secret à travers le serveur (P) est de minimiser les interactions du terminal (10) avec une pluralité d'équipements (en l'occurrence le serveur (A) et le serveur (RI)). De la même manière que sur la figure 1, le serveur (A) récupère les caractéristiques du terminal (10) lors de l'étape (500) de génération de l'objet crypté (DCF) pour déterminer et indiquer dans l'objet crypté (DCF) un type de session le plus approprié à l'équipement (20) et au terminal (10).

En référence à la figure 1, le procédé comprend par exemple, pour établir la session :
- une étape (540) d'identification du terminal (10) par le système d'authentification (A) en liaison avec le serveur (RI), par utilisation de données (D) d'identification et de données (DA) d'autorisation du terminal (10) (les données d'autorisation pouvant aussi être communiquées au terminal) ;
- une étape (500) de génération, par le système d'authentification (A), d'une clé de session en cas de succès de l'étape (540) d'identification du terminal (10), suivie d'une étape (550) de réception par le terminal (10) de la clé de session protégée via un objet DCF ;
- une étape (560) de génération par le serveur (RI) d'un objet protégé (RO) encapsulant des droits d'utilisation qui prennent en compte des caractéristiques du terminal (10) identifiées à l'aide des données (D) d'identification ;
- une étape (57) de communication entre le terminal (10) et ledit serveur (RI), dans laquelle le serveur (RI) délivre au terminal (10) l'objet de droits (RO) ;
- une étape (58) d'extraction par le terminal (10) de la clé de session du DCF générée par le système d'authentification (A) grâce à l'utilisation d'un DRM Agent et de l'objet de droits (RO) délivré par le serveur (RI) ;
- une étape (580) d'accès à l'équipement (20) par le terminal (10), par utilisation d'une part de la clé de session extraite lors de l'étape (58).

Ainsi, dans l'exemple des figures 1 et 2, le terminal (10) peut recevoir le secret sous la forme d'un objet standard contenant de l'information protégée, appelé un DCF (pour DRM Content Format). Cette information est par exemple cryptée par une ou plusieurs clés qui sont envoyées séparément dans un objet lui-même crypté par clés publiques et privées, cet objet constituant un « Rights Object » ou objet de droits (RO) selon le standard DRM OMA V2. En référence à la figure 1, lors de son interrogation (53), le système d'authentification (A) fournit au terminal (10) un contenu DCF (étape (550)), contenant le(s) secret(s) requis, ce contenu étant encrypté par exemple grâce à une clé K. En parallèle le système d'authentification (A) peut fournir également un secret ou une clé associée au secret distribué au terminal (10) qui permettra à l'équipement (20) d'authentifier ce terminal, comme illustré par l'étape (54). C'est le serveur (RI) qui assure la distribution de droits d'utilisation de contenu numérique. Le serveur (RI) peut aussi distribuer la ou les clés de session permettant de décrypter ce contenu, à travers l'envoi desdits objets cryptés (RO) ou de l'information protégée DCF. Autrement dit, le serveur d'authentification (A) fournit au terminal le(s) secret(s) sous forme d'un objet crypté DCF complété par l'objet de droits RO associé fourni par le serveur (RI).

Tandis que la délivrance de l'information protégée DCF et de l'objet de droits (RO) s'effectue de manière combinée dans l'exemple de la figure 2, on conçoit que cette délivrance puisse être séparée, comme illustré par la figure 1. Dans ce cas, l'étape de requête (53) émanant du terminal (10) ne concerne que l'objet crypté (DCF) porteur de la clé de session ainsi que l'objet de droits (RO) d'utilisation. Il faut également comprendre que l'étape (53) initiée par le terminal (10) pour requérir une clé de session générée par le système d'authentification (A) peut être remplacée par une étape (53') de requête provenant de l'équipement (E), ce qui permet de réduire le temps de communication.

Selon une mise en oeuvre de l'invention, l'équipement (20) peut lui-même jouer le rôle du serveur DRM Proxy (P) illustré sur la figure 2.

Dans un mode de réalisation de l'invention, l'information protégée peut être distribuée par un serveur secondaire fournisseur d'objets en format DCF. Dans ce cas, le système d'authentification (A) peut par exemple transmettre à l'équipement (20) un nom ou adresse de ressource URL du serveur secondaire (contenant les secrets et l'identité unique de la connexion) fournisseur d'objets en format DCF, porteurs de clé de session. L'équipement (20) envoie cette information au terminal (10). Ainsi, un module de connexion du terminal (10) peut ensuite requérir auprès de ce serveur secondaire l'objet en format DCF porteur de la clé de session qui permet au terminal (10) d'accéder à l'équipement (20), la clé de session étant récupérée en clair au niveau du terminal (10), après utilisation par un agent DRM du terminal (10) de la clé (6) servant à décrypter l'information protégée DCF, cette clé de cryptage/décryptage (6) étant fournie dans l'objet de droits (RO). Autrement dit, l'étape (57) d'envoi de l'objet de droits (RO), comme illustré à la figure 2, permet dans ce cas de délivrer au moins une clé de cryptage/décryptage (6) dont le module de décryptage (12) du terminal (10) a besoin pour extraire un contenu exploitable de l'information protégée DCF.

Dans les modes de réalisation des figures 1 et 2, le système d'authentification (A) transmet la clé de cryptage/décryptage (6) lors de l'étape (55) de communication avec le serveur (RI), afin que ce dernier envoie cette clé (6) via un objet de droits (RO) protégé. En référence à la figure 3, la récupération (60) de cette clé de cryptage/décryptage (6) générée et stockée par le système d'authentification (A) peut s'effectuer après une requête (530) du serveur (RI) pour récupérer cette clé (6) de cryptage/décryptage. La clé de cryptage/décryptage (6) peut être remplacée par n'importe quelle(s) autre(s) clé(s) ou données de confiance pour protéger le contenu de l'information DCF.

L'étape (53) correspond à une requête par le terminal auprès du serveur d'authentification (A) afin d'obtenir le(s) secret(s) lui permettant d'établir la connexion ou session sécurisée avec l'équipement. Ces secrets, une fois générés dans l'étape (500), deviennent un contenu à traiter selon les spécifications DRM du standard OMA V2. Autrement dit, l'étape (560) de génération de l'objet de droits (RO) et/ou de l'information DCF correspond à une extension du champ d'application de la technologie DRM, et de l'architecture habituelle associée. Pour cela, le procédé selon l'invention utilise un nouveau lien entre l'entité de l'architecture DRM qui distribue un droit d'utilisation à un terminal/ensemble de terminaux d'un utilisateur, c'est-à-dire le serveur (RI), et un système d'authentification (A) lié à une passerelle d'accès à un service de communication qui gère des sessions réalisées via le réseau (N) au niveau de l'équipement (20).

En référence aux figures 1 et 2, lors d'une tentative d'accès (51) par un terminal (10) d'utilisateur à un service demandant l'établissement d'une connexion (session) à un équipement (20), cet équipement (20) indique au terminal (10) dans une première réponse automatique (52) qu'il a besoin de secret(s) afin d'établir une connexion ou session sécurisée. Dans un mode de réalisation de l'invention, l'équipement (20) peut éventuellement indiquer dans cette réponse (52) le serveur d'authentification (A) distributeur de droits d'utilisation et/ou un serveur secondaire approprié pour délivrer l'objet de droits et/ou l'information DCF adéquats. Par exemple, le système d'authentification (A) est adapté pour transmettre à l'équipement (20) une adresse de ressource URL du serveur (RI), pour permettre ensuite au terminal (10) d'effectuer l'étape (50) d'enregistrement en utilisant cette adresse de ressource URL lors d'une demande de connexion effectuée auprès de l'équipement (20).

Le terminal soumet alors une requête (53) au serveur d'authentification (A) qui lui fournit le secret. On comprend que ce système (A) peut très bien être co-localisé avec le serveur (RI) ou avec l'équipement (20).

L'étape (58) de décryptage, notamment de l'objet crypté DCF, peut être réalisée au niveau du terminal (10) qui dispose de tous les éléments nécessaires pour extraire les données protégées. Ces données protégées contiennent par exemple la ou les clés de session, les droits d'utilisation et un certificat et/ou un identifiant unique de connexion à l'équipement (20). Le terminal (10) dispose d'un module cryptographique (12) qui a été identifié par le serveur (RI) lors de l'étape (50) d'enregistrement pour extraire ces données protégées. L'étape (580) d'accès à l'équipement (20) est réalisée après le décryptage de l'objet crypté (DCF) et l'utilisation d'un module de connexion du terminal (10) pour s'authentifier auprès de l'équipement (20). Dans un mode de réalisation de l'invention, une étape (55) de communication entre le système d'authentification (A) et le serveur (RI) qui succède à l'étape (540) d'identification du terminal (10) comprend la transmission vers le serveur (RI) d'un identifiant unique de connexion rattaché au terminal (10). La transmission de cet identifiant de connexion au serveur (RI) peut s'effectuer, de manière non limitative, en même temps que la transmission du secret à délivrer ensuite avec l'objet crypté (DCF).

L'étape (500) de génération de l'objet crypté (DCF) par le serveur d'authentification (A) prend avantageusement en compte les caractéristiques et donc les fonctionnalités spécifiques du terminal (10). Il faut aussi souligner que le système d'authentification (A) permet de délivrer au terminal (10) un certificat pour établir la session qui est unique. Ainsi, ce type de certificat peut être lié de manière unique à l'identité de l'utilisateur (typiquement le MSISDN).

Dans l'exemple de la figure 1, ladite étape (57) de communication entre le terminal (10) et le serveur (RI) est initiée par une étape (56) de requête du terminal (10) auprès du serveur (RI) pour l'objet de droits (RO). En référence à la figure 1, l'étape (57) de communication entre le terminal (10) et ledit serveur (RI) peut être initiée unilatéralement par le serveur (RI) pour délivrer l'objet de droits (RO) associé au terminal (10) et au DCF.

De la même manière dans les exemples des figures 1 et 2, la distribution du DCF au terminal (10) est initiée par une étape (53) pour la distribution de secret au terminal (10). En référence aux figures 1 et 2, les étapes (57 ;550) peuvent être initiées unilatéralement par le serveur d'authentification (A) ou par le serveur DRM Proxy (P).

L'étape (53') correspond à une requête de délivrance de cet objet crypté (DCF) et de l'objet de droits (RO), initiée par l'équipement (20) venant d'être sollicité par le terminal (10). Dans le mode de réalisation de la figure 2, mettant en oeuvre ce mécanisme, l'équipement (20) est en charge de transmettre les données d'identifications au serveur d'authentification (A).

Dans le mode de réalisation préféré de l'invention, le réseau (N) reliant le serveur (RI), le serveur d'authentification (A) et le terminal (10) est un réseau géré par un opérateur de radiotéléphonie, le terminal (10) pouvant ainsi communiquer au moins avec le serveur (RI) et le serveur d'authentification (A) pour n'importe quelle localisation desservie par le réseau (N). En référence à la figure 3, le procédé prévoit une étape de stockage de données (D) d'identification du terminal (10) dans des moyens de mémorisation (4) à la disposition du système d'authentification (A). Ces données (D) d'identification permettent, en combinaison avec les données d'autorisation (DA) fournies par le terminal (10), l'identification par le système d'authentification (A). Le module (40) d'identification du système (A), stocké dans les moyens de mémorisation (4) du système (A), permet de comparer les données reçues avec l'information attendue ainsi que la génération des clés de sessions et de DCF. En cas de correspondance, le terminal (10) est identifié et peut recevoir les éléments secrets requis pour l'établissement de la session avec l'équipement (20).

Les données d'autorisation (DA) sont stockées dans une mémoire (11) du terminal (10) et incluent par exemple un certificat ou une clé d'authentification liée à l'utilisateur et/ou au terminal (10). Le serveur (RI) et le système d'authentification (A) disposent par exemple des mêmes données (D) d'identification de terminal (10) pour pouvoir effectuer séparément des tâches en tenant compte des caractéristiques du terminal (10), ces tâches permettant de fournir de manière protégée au terminal (10) les éléments nécessaires à l'établissement d'une session/connexion sécurisée avec l'équipement (20) du réseau (N). Les moyens de mémorisation (3) du serveur (RI) permettent de stocker notamment les données (D) d'identification de terminaux, par exemple sous la forme de tables répertoriant des caractéristiques de chaque terminal (10). Le module (30) de génération d'objets de droits (RO) et éventuellement un module générateur d'informations protégées de type DCF peuvent être stockés dans les moyens de mémorisation (3) du serveur (RI).

Dans un mode de réalisation de l'invention, l'équipement (20) peut être accédé par le terminal (10) par une connexion à courte distance (« Bluetooth », infrarouge, WiFi, etc.), sans passer par le réseau (N). Dans un premier cas, le terminal (10) utilise le réseau (N) pour récupérer les éléments nécessaires à l'établissement de la connexion, tels que l'objet de droits (RO) délivré par le serveur (RI). Alternativement, l'équipement (20) qui a accès à un réseau peut jouer le rôle de DRM Proxy (P) et donc le terminal (10) n'a pas besoin d'utiliser le réseau (N).

Des certificats de «domaine» peuvent être générés par le serveur (RI) pour permettre d'associer un ensemble de terminaux (10) pouvant disposer des mêmes droits, car par exemple appartenant à un même utilisateur. Afin de minimiser les interactions entre des terminaux (10) et le ou les serveurs (RI) et (A) disponibles d'un réseau (N) pour délivrer des droits d'utilisation, un ensemble de «terminaux» peut être appareillé en domaines. Ainsi, si par exemple une dizaine de terminaux sont appareillés en domaines, lorsque l'un des terminaux a obtenu le(s) secret(s) lui permettant d'accéder à un équipement (20), alors ce terminal peut transmettre le(s) secret(s) aux neuf autres terminaux suivant les mécanismes classiques de transmission d'objets DCF et RO dans un domaine DRM. N'importe lequel des neuf autres terminaux est dès lors en mesure d'établir une session ou connexion sécurisée avec l'équipement (20) sans interrogation additionnelle d'un serveur (RI) distributeur d'objets RO au sens du standard d'architecture DRM OMA V2. Des mécanismes d'appareillage d'équipements en domaines sont par exemple décrits dans les spécifications OMA DRM V2.

De cette façon, un usager peut appareiller en domaines par exemple son terminal mobile (10) avec son boîtier de connexion (distribué par un fournisseur d'accès à Internet) qui constitue un deuxième terminal. Dès lors, le boîtier sera en mesure de transmettre le(s) secret(s) obtenus auprès du serveur (A) et les objets de droits (RO) obtenus auprès du serveur (RI) au terminal mobile (10) et un utilisateur pourra avoir des droits de connexion à un équipement (20) pour un ensemble de terminaux référencés.

Dans un tel mode et afin de limiter les ressources allouées par le boîtier, le boîtier peut limiter à une liste fermée les connexions non sécurisées vers des équipements. Le boîtier de connexion peut ne laisser accéder au réseau (N) que des terminaux aptes à établir une session/connexion sécurisée vers un ou plusieurs équipements ainsi que des requêtes vers un ensemble limité d'équipements. On peut noter que dans l'exemple susmentionné, le boîtier peut lui-même être considéré comme l'équipement (20).

Pour permettre de supporter une classe de terminaux pour laquelle des mécanismes de connexions/sessions sécurisés multiples peuvent être mis en oeuvre, le serveur d'authentification (A) peut avantageusement indiquer le type de connexion/session sécurisée qui est le plus approprié à l'équipement (20) et au terminal (10) en question. En effet, l'avantage de l'identification du terminal (10) est de connaître exactement ses caractéristiques et donc d'envoyer éventuellement des paramètres spécifiques à cette classe de terminaux lors de l'établissement de la demande de connexion/session.

Dans l'exemple d'un terminal de radiocommunication mobile souhaitant accéder à diverses ressources réseaux par le biais de boîtiers de connexions distribuées par un fournisseur d'accès à Internet, le terminal (10) doit dans un premier temps s'enregistrer auprès d'un serveur (RI) distributeur d'objets de droits d'utilisation. Le terminal (10) doit également s'enregistrer auprès d'un serveur d'authentification (A). Au terminal (10) en question est associé un abonnement de fournisseur d'accès à Internet. Lorsque le terminal (10) tente d'accéder à un équipement (20) via l'un des boîtiers dudit fournisseur, l'équipement (20) lui indique qu'il a besoin d'obtenir des secrets auprès du serveur d'authentification (A) indiqué. Le terminal (10) effectue alors une demande au serveur (A) pour obtenir au moins un secret lui permettant d'ouvrir une connexion ou une session sécurisée vers l'équipement (20). Dès réception du secret (via le DCF) et de l'objet de droits, le terminal (10) est en mesure d'ouvrir une session ou connexion sécurisée vers l'équipement (20).

Un des avantages du procédé selon l'invention est qu'il ne repose pas sur un mécanisme statique de certification du terminal (10), dans lequel tous les éléments nécessaires sont préenregistrés dans le terminal (10). Le procédé décrit propose au contraire une certification dynamique du terminal, utilisant le réseau (N) comme un outil de certification dynamique : si le terminal (10) est bien celui qu'il prétend être, il doit être capable non seulement de réussir l'étape (540) d'identification, mais encore être capable d'exploiter les informations protégées délivrées par un serveur (RI) ayant connaissance de caractéristiques spécifiques du terminal (10) autorisé. Par exemple, le logiciel de connexion du terminal (10) autorisé sait, d'une part contacter les serveurs (A) et (RI) après réception de la réponse de l'équipement (20), pour obtenir le DCF et le RO associé, et d'autre part utiliser les secrets contenus dans l'objet crypté (DCF) pour s'authentifier auprès de l'équipement (20) et de son serveur d'authentification. En outre, le logiciel de connexion du terminal (10) peut éventuellement crypter la connexion à l'équipement (20).

Il doit être compris que l'invention ne se limite pas seulement à une simple extension de l'utilisation d'agents DRM usuels disponibles dans les terminaux mobiles (10). Selon le procédé de l'invention, le secret qui servira à authentifier/identifier le terminal (10) lors de son accès à un équipement (20) peut être considéré comme du contenu distribué par les mécanismes de type DRM V2 (DRM Specification, OMA V2).

Les applications de l'invention sont multiples. Ainsi, dans une application DRM, le terminal (10) ne peut transmettre à l'équipement (20) ses droits d'utilisation spécifiques et la ou les clés de session sans avoir subi une identification à travers le réseau (N). En outre, les caractéristiques du terminal (10) sont bien prises en compte. Lorsqu'un applicatif du terminal (10) demandera l'accès à l'équipement (20), il pourra interroger le système d'authentification (A) qui identifiera le terminal (10) et fournira les éléments nécessaires avec le support du serveur (RI). Dès lors, le serveur (RI) partageant un secret avec le terminal (10), les droits d'usages des clés pourront être transmis de manière opérationnelle et sécurisée via un objet RO et une information DCF.

Par ailleurs, le contenu DCF ainsi que l'objet RO peuvent être envoyés de manière proactive au terminal (10), ce qui permet de minimiser le temps d'établissement de connexion/session à l'équipement (20). Il faut également noter que le procédé selon l'invention peut être mis en oeuvre également dans le but uniquement de permettre l'authentification d'un terminal/client.

L'utilisation du serveur (RI) disponible via le réseau (N) et du système d'authentification (A) selon l'invention peut permettre aussi de fournir des privilèges sur un équipement (20) en fonction de l'identification du terminal (10) et de son type. Ainsi, dans l'exemple où l'équipement (20) est un boîtier de connexion de fournisseur d'accès à Internet, le boîtier peut autoriser un terminal (10) à accéder à des ressources limitées (par exemple uniquement le système d'authentification (A) et le serveur (RI) avec le protocole HTTP). A l'issue de l'authentification, le boîtier peut alors fournir un niveau de privilèges adapté au terminal (10), comme par exemple autoriser en plus ce terminal (10) à effectuer des appels vocaux via le réseau (N).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'établissement d'une session sécurisée entre un terminal radio (10) et un équipement (20) interconnectés via un réseau (N), **caractérisé en ce qu'**il comprend :
- une étape préalable (50) d'enregistrement du terminal (10) auprès d'un serveur (RI) distributeur de droits d'utilisation dans des objets de droits (RO), l'étape d'enregistrement (50) permettant au serveur (RI) d'enregistrer des données (D) d'identification du terminal (10) et de fournir au terminal des éléments d'adaptation à des conditions de communication avec le serveur (RI),
- une étape d'identification du terminal (10) et de génération dudit secret par un système d'authentification (A) en liaison avec le serveur (RI) distributeur de droits d'utilisation avant l'établissement entre le terminal (10) et le serveur (RI) d'une communication spécifique pour permettre d'accéder à l'équipement (20),
- une étape de distribution d'un secret, issu du système d'authentification (A) au terminal (10), à utiliser par le terminal (10) pour établir la session,
- ainsi qu'une étape d'envoi de droits d'utilisation, issu du serveur (RI) distributeur de droits d'utilisation, au terminal (10), les droits d'utilisation envoyés comportant des permissions d'accéder à l'équipement (20),
- une étape d'utilisation du secret et des droits d'utilisation pour établir une session sécurisée entre le terminal (10) et l'équipement (20).

2. Procédé selon la revendication 1, comprenant pour établir la session :
- une étape (540) d'identification du terminal (10) par le système d'authentification (A) en liaison avec le serveur (RI), par utilisation de données (D) d'identification et de données d'autorisation (DA) du terminal (10) ;
- une étape (500) de génération, par le système d'authentification (A), d'une clé de session en cas de succès de l'étape (540) d'identification du terminal (10), suivie d'une étape (550, 57) de réception par le terminal (10) de la clé de session ;
- une étape (560) de génération par le serveur (RI) d'un objet de droits (RO) protégé par des moyens distincts de la clé de session, l'objet de droits (RO) encapsulant des droits d'utilisation qui prennent en compte des caractéristiques du terminal (10) identifiées à l'aide des données (D) d'identification ;
- une étape (57) de communication entre le terminal (10) et ledit serveur (RI), dans laquelle le serveur (RI) délivre au terminal (10) l'objet de droits (RO) ;
- une étape (580) d'accès à l'équipement (20) par le terminal (10), par utilisation d'une part de la clé de session générée par le système d'authentification (A), et d'autre part des droits d'utilisation contenus dans l'objet de droits (RO) délivré par le serveur (RI).

3. Procédé selon la revendication 1 ou 2, comprenant une étape de stockage de données (D) d'identification du terminal (10) dans des moyens de mémorisation (4) à la disposition du système d'authentification (A).

4. Procédé selon la revendication 2 ou 3, dans lequel l'étape (560) de génération par le serveur (RI) d'un objet de droits (RO) est réalisée suivant les spécifications DRM du standard OMA V2.

5. Procédé selon une des revendications 2 à 4, dans laquelle ladite étape (540) d'identification du terminal (10) est suivie d'une étape (55) de communication entre le système d'authentification (A) et ledit serveur (RI), dans laquelle le système d'authentification (A) transmet au serveur (RI) un identifiant unique de connexion rattaché au terminal (10).

6. Procédé selon une des revendications 2 à 5, dans lequel ladite étape (57) de communication entre le terminal (10) et ledit serveur (RI) est initiée par une étape (56) de requête du terminal (10) auprès du serveur (RI) pour obtenir un objet de droits (RO) protégé par un cryptage dont la clef est associée au terminal (10).

7. Procédé selon une des revendications 2 à 5, dans lequel ladite étape (57) de communication entre le terminal (10) et ledit serveur (RI) est initiée unilatéralement par le serveur (RI) pour délivrer un objet de droits (RO) protégé et associé au terminal.

8. Procédé selon l'une des revendications 2 à 5, dans lequel ladite étape (550) de communication entre le terminal (10) et ledit serveur d'authentification (A) est initiée par une étape (53) de requête du terminal (10) auprès du serveur d'authentification (A).

9. Procédé selon l'une des revendications 2 à 5, dans lequel ladite étape (550) de communication entre le terminal (10) et ledit serveur d'authentification (A) est initiée unilatéralement par le serveur d'authentification (A), pour délivrer un objet crypté (DCF) au terminal.

10. Procédé selon l'une des revendications 2 à 5, dans lequel l'étape de communication entre le terminal (10) et un serveur DRM Proxy (P) est initiée par une étape (53) de requête du terminal (10) auprès du serveur DRM Proxy (P).

11. Procédé selon l'une des revendications 2 à 5, dans lequel l'étape de communication entre le terminal (10) et le ledit serveur DRM Proxy (P) est initiée unilatéralement par le serveur DRM Proxy (P), pour délivrer un objet de crypté (DCF) et un objet de droits (RO).

12. Procédé selon une des revendications 1 à 11, comprenant une étape (58) de décryptage de l'objet de droits (RO) et de l'objet crypté (DCF) au niveau du terminal (10), par un module cryptographique (12) du terminal (10) qui a été identifié par le serveur (RI) lors de l'étape (50) d'enregistrement.

13. Procédé selon une des revendications 1 à 11, comprenant une étape (55) de communication entre le système d'authentification (A) et ledit serveur (RI), dans laquelle le système d'authentification (A) transmet au moins une clé de cryptage/décryptage (6) au serveur (RI).

14. Procédé selon une des revendications 2 à 10, dans lequel l'objet crypté (DCF) délivré par le serveur d'authentification (A) et l'objet de droits (RO) délivré par le serveur (RI) sont reçus par le terminal (10) et traités par un agent DRM, l'étape (580) d'accès à l'équipement (20) étant réalisée après un décryptage de l'objet crypté (DCF) grâce à l'utilisation de l'objet de droits associé au terminal et une utilisation d'un module de connexion du terminal (10) pour s'authentifier auprès de l'équipement (20).

15. Procédé selon une des revendications 2 à 11, dans lequel le serveur d'authentification (A) insère dans l'objet crypté (DCF) délivré au terminal (10) au moins une clé de cryptage/décryptage (6).

16. Procédé selon la revendication 15, dans lequel le système d'authentification (A) transmet à l'équipement (20) une adresse de ressource URL d'un serveur secondaire fournisseur d'objets en format DCF, porteurs de clé de session, de façon à ce qu'un module de connexion du terminal (10) puisse requérir auprès de ce serveur secondaire l'objet en format DCF porteur de la clé de session qui permet au terminal (10) d'accéder à l'équipement (20), la clé de session étant récupérée en clair au niveau du terminal (10), après utilisation par un agent DRM du terminal (10) de la clé de cryptage/décryptage (6).

17. Procédé selon une des revendications 1 à 16, dans lequel le système d'authentification (A) transmet à l'équipement (20) une adresse de ressource URL du serveur (RI) pour permettre au terminal (10) d'effectuer ladite étape (50) d'enregistrement en utilisant cette adresse de ressource URL lors d'une demande de connexion effectuée auprès de l'équipement (20).

18. Procédé selon une des revendications 2 à 17, dans lequel le terminal (10) reçoit avec l'objet de droits (RO) des modalités d'utilisation de la clé de session des données de spécification d'une durée de validité de la clé de session.

19. Procédé selon une des revendications 2 à 18, dans lequel le terminal (10) reçoit avec l'objet de droits (RO) des modalités d'utilisation de la clé de session des données de spécification d'un nombre limite d'utilisations de la clé de session.

20. Procédé selon une des revendications 2 à 14, dans lequel le serveur d'authentification (A) récupère les caractéristiques du terminal (10) lors de l'étape (500) de génération de l'objet crypté (DCF) pour déterminer et indiquer dans l'objet crypté (DCF) un type de session le plus approprié à l'équipement (20) et au terminal (10).

21. Procédé selon une des revendications 2 à 20, dans lequel l'étape (540) d'identification s'effectue auprès d'un système d'authentification (A) co-localisé avec le serveur (RI).

22. Procédé selon une des revendications 2 à 20, dans lequel l'étape (540) d'identification s'effectue auprès d'un système d'authentification (A) co-localisé avec l'équipement (20).

23. Procédé selon une des revendications 1 à 22, comprenant une étape d'appareillage du terminal (10) et d'un boîtier de connexion au réseau (N) ou autre terminal communiquant avec le réseau (N) pour appareiller ainsi plusieurs terminaux en domaines et une étape de partage de l'objet crypté (DCF) généré par le système d'authentification (A) et de ses modalités d'utilisation présentées dans l'objet de droits (RO).

24. Procédé selon la revendication 1, **caractérisé en ce que** l'étape d'identification comprend les étapes suivantes :
- délivrer et transmettre les données (D) d'identification, pour permettre au terminal (10) de s'identifier auprès d'un système d'authentification du réseau (N),
- extraire de données reçues via le réseau (N) au moins un secret généré par le système d'authentification, par utilisation de l'agent DRM.

25. Procédé selon la revendication 1, **caractérisé en ce que** l'étape de distribution d'un secret comprend les étapes suivantes :
- recevoir un objet de droits (RO) issu d'un serveur (RI) distributeur de droits d'utilisation protégés,
- déclencher un décryptage par un agent DRM de l'objet crypté (DCF) à l'aide de l'objet de droits (RO).

26. Procédé selon la revendication 1, **caractérisé en ce que** l'étape d'envoi de droits d'utilisation comprend les étapes suivantes :
- recevoir un objet de droits (RO) issu d'un serveur (RI) distributeur de droits d'utilisation protégés,
- extraire de l'objet crypté (DCF) des droits d'utilisation comportant des permissions d'accéder à un équipement (20) du réseau (N).

27. Programme de calculateur chargeable directement dans une mémoire interne d'une unité de traitement numérique localisée dans un terminal (10) de radiocommunication apte à communiquer avec un réseau (N) de radiotéléphonie, le terminal comprenant des moyens de stockage (11) de données (D) d'identification du terminal (10), **caractérisé en ce qu'**il comprend des portions de codes de logiciel pour l'exécution des étapes du procédé selon la revendication 1 lorsque ledit programme est exécuté par l'unité de traitement numérique.

## Claims

1. Method of setting up a secure session between a wireless terminal (10) and an item of equipment (20) which are interconnected via a network (N), **characterised in that** it comprises:
- a prior step (50) of registration of the terminal (10) with a rights issuer server (RI) for use in rights objects (RO), the registration step (50) enabling the server (RI) to record identification data (D) of the terminal (10) and to provide the terminal with elements for adaptation to communication conditions with the server (RI),
- a step of identification of the terminal (10) and generation of a secret by an authentication system (A), linking with the server (RI) distributing user rights before a specific communication is set up between the terminal (10) and the server (RI) to allow access to the item of equipment (20),
- a step of distribution of the said secret, supplied by the authentication system (A) to the terminal (10), to be used by the terminal (10) to set up the session,
- and a step of sending user rights, supplied by the user rights issuer server (RI) to the terminal (10), the sent user rights including permissions to access the item of equipment (20).

2. Method as claimed in Claim 1, comprising, in order to set up the session:
- a step (540) of identification of the terminal (10) by the authentication system (A) linking with the server (RI), by use of identification data (D) and authorisation data (DA) of the terminal (10);
- a step (500) of generation, by the authentication system (A), of a session key if the step (540) of identification of the terminal (10) is successful, followed by a step (550, 57) of reception of the session key by the terminal (10);
- a step (560) of generation by the server (RI) of a rights object (RO) protected by means separate from the session key, the rights object (RO) encapsulating user rights which take into account the characteristics of the terminal (10) identified with the aid of the identification data (D);
- a step (57) of communication between the terminal (10) and the said server (RI), in which the server (RI) delivers the rights object (RO) to the terminal (10);
- a step (580) of access to the item of equipment (20) by the terminal (10) by use of, on the one hand, the session key generated by the authentication system (A) and, on the other hand, the user rights contained in the rights object (RO) delivered by the server (RI).

3. Method as claimed in Claim 1, comprising a step of storage of identification data (D) of the terminal (10) in memory means (4) available to the authentication system (A).

4. Method as claimed in Claim 2 or 3, wherein the step (560) of generation by the server (RI) of a rights object (RO) is performed according to the DRM specifications of the OMA V2 standard.

5. Method as claimed in any one of Claims 2 to 4, wherein the said step (540) of identification of the terminal (10) is followed by a step (55) of communication between the authentication system (A) and the said server (RI), in which the authentication system (A) transmits to the server (RI) a unique connection identifier attached to the terminal (10).

6. Method as claimed in any one of Claims 2 to 5, wherein the said step (57) of communication between the terminal (10) and the said server (RI) is initiated by a step (56) of request by the terminal (10) to the server (RI) to obtain a rights object (RO) protected by encryption of which the key is associated with the terminal (10).

7. Method as claimed in any one of Claims 2 to 5, wherein the said step (57) of communication between the terminal (10) and the said server (RI) is initiated unilaterally by the server (RI) to deliver a protected rights object (RO) which is associated with the terminal.

8. Method as claimed in any one of Claims 2 to 5, wherein the said step (550) of communication between the terminal (10) and the said authentication server (A) is initiated by a step (53) of request by the terminal (10) to the authentication server (A).

9. Method as claimed in any one of Claims 2 to 5, wherein the said step (550) of communication between the terminal (10) and the said authentication server (A) is initiated unilaterally by the authentication server (A) to deliver an encrypted object (DCF) to the terminal.

10. Method as claimed in any one of Claims 2 to 5, wherein the said step of communication between the terminal (10) and a DRM proxy server (P) is initiated by a step (53) of request by the terminal (10) to the DRM proxy server (P).

11. Method as claimed in any one of Claims 2 to 5, wherein the step of communication between the terminal (10) and the said DRM proxy server (P) is initiated unilaterally by the DRM proxy server (P) to deliver an encrypted object (DCF) and a rights object (RO).

12. Method as claimed in any one of Claims 1 to 11, comprising a step (58) of decryption of the rights object (RO) and of the encrypted object (DCF) at the terminal (10), by a cryptographic module (12) of the terminal (10) which was identified by the server (RI) during the step (50) of registration.

13. Method as claimed in any one of Claims 1 to 11, comprising a step (55) of communication between the authentication system (A) and the said server (RI), wherein the authentication system (A) transmits at least one encryption/decryption key (6) to the server (RI).

14. Method as claimed in any one of Claims 2 to 10, wherein the encrypted object (DCF) delivered by the authentication server (A) and the rights object (RO) delivered by the server (RI) are received by the terminal (10) and processed by a DRM agent, the step (580) of access to the item of equipment (20) being performed after decryption of the encrypted object (DCF) by use of the rights object associated with the terminal, and the use of a connection module of the terminal (10) for authentication with the item of equipment (20).

15. Method as claimed in any one of Claims 2 to 11, wherein the authentication server (A) inserts at least one encryption/decryption key (6) into the encrypted object (DCF) delivered to the terminal (10).

16. Method as claimed in Claim 15, wherein the authentication system (A) transmits to the item of equipment (20) a URL resource address of a secondary server which supplies objects in DCF format, carrying session keys, in such a way that a connection module of the terminal (10) can request from this secondary server the object in DCF format carrying the session key which enables the terminal (10) to access the equipment (20), the session key being retrieved in decoded form at the terminal (10) after use of the encryption/decryption key (6) by a DRM agent of the terminal (10)..

17. Method as claimed in any one of Claims 1 to 16, wherein the authentication system (A) transmits a URL resource address of the server (RI) to the item of equipment (20) in order to enable the terminal (10) to perform the said step (50) of registration using this URL resource address at the time of making a request for connection to the item of equipment (20).

18. Method as claimed in any one of Claims 2 to 17, wherein the terminal (10) receives the rights object (RO) together with the conditions of use of the session key as well as data specifying the period of validity of the session key.

19. Method as claimed in any one of Claims 2 to 18, wherein the terminal (10) receives the rights object (RO) together with the conditions of use of the session key and data specifying a limited number of uses of the session key.

20. Method as claimed in any one of Claims 2 to 14, wherein the authentication server (A) retrieves the characteristics of the terminal (10) during the step (500) of generation of the encrypted object (DCF) in order to determine and indicate in the encrypted object (DCF) a type of session most appropriate for the item of equipment (20) and for the terminal (10).

21. Method as claimed in any one of Claims 2 to 20, wherein the step (540) of identification is performed with an authentication system (A) co-located with the server (RI).

22. Method as claimed in any one of Claims 2 to 20, wherein the step (540) of identification is performed with an authentication system (A) co-located with the item of equipment (20).

23. Method as claimed in any one of Claims 1 to 22, comprising a step of pairing of the terminal (10) and a box for connection to the network (N) or another terminal communicating with the network (N) in order to domain match several terminals, and a step of sharing the encrypted object (DCF) generated by the authentication system (A) and its conditions of use presented in the rights object (RO).

24. Method as claimed in Claim 1, **characterised in that** the step of identification comprises the following steps:
- delivering and transmitting identification data (D) in order to enable the terminal (10) to identify itself with an authentication system of the network (N);
- extracting from data received via the network (N) at least one secret generated by the authentication system, using the DRM agent;

25. Method as claimed in Claim 1, **characterised in that** the step of distribution comprises the following steps:
- receiving a rights object (RO) issued by a server (RI) distributing protected user rights;
- initiating a decryption by a DRM agent of the encrypted object (DCF) using the rights object (RO).

26. Method as claimed in Claim 1, **characterised in that** the step of sending the user rights comprises the following steps:
- receiving a rights object (RO) issued by a server (RI) distributing protected user rights;
- extracting from the encrypted object (DCF) the user rights containing permissions to access an item of equipment (20) of the network (N);

27. Computing program directly downloadable into an internal memory of a digital processing unit located in a wireless communication terminal (10) capable of communicating with a wireless telephone network (N), the terminal comprising storage means (11) for identification data (D) of the terminal (10), **characterised in that** it comprises portions of software codes for execution of the steps of the method as claimed in Claim 1 when the said program is run by the digital processing unit.

## Patentansprüche

1. Verfahren zum Einrichten einer sicheren Sitzung zwischen einem Funkendgerät (10) und einer Einrichtung (20), die über ein Netzwerk (N) miteinander verbunden sind, **dadurch gekennzeichnet, dass** es Folgendes umfasst:
- einen vorläufigen Schritt (50) des Registrierens des Endgeräts (10) bei einem Server (RI) zum Ausgeben von Nutzungsrechten in Rechtsobjekten (RO), wobei es der Registrierschritt (50) dem Server (RI) gestattet, Daten (D) zum Identifizieren des Endgeräts (10) zu registrieren und dem Endgerät Elemente zur Anpassung an Kommunikationsbedingungen mit dem Server (RI) zu liefern,
- einen Schritt des Identifizierens des Endgeräts (10) und des Erzeugens eines Geheimnisses durch ein Authentifikationssystem (A) in Verbindung mit dem Server (RI) zum Ausgeben von Nutzungsrechten vor dem Einrichten einer speziellen Kommunikation zwischen dem Endgerät (10) und dem Server (RI), um den Zugriff auf die Einrichtung (20) zu gestatten,
- einen Schritt des Ausgebens des von dem Authentifikationssystem (A) an das Endgerät (10) ausgegebenen Geheimnisses zur Benutzung durch das Endgerät (10) zum Einrichten der Sitzung,
- sowie einen Schritt des Sendens von Nutzungsrechten, ausgegeben vom Nutzungsrechteausgabeserver (RI), an das Endgerät (10), wobei die gesendeten Nutzungsrechte Genehmigungen zum Zugreifen auf die Einrichtung (20) umfassen,
- einen Schritt zur Nutzung des Geheimnisses und der Nutzungsrechte zum Einrichten einer sicheren Sitzung zwischen dem Endgerät (10) und der Einrichtung (20).

2. Verfahren nach Anspruch 1, das zum Einrichten der Sitzung Folgendes umfasst:
- einen Schritt (540) des Identifizierens des Endgeräts (10) durch das Authentifikationssystem (A) in Verbindung mit dem Server (RI) anhand von Identifikationsdaten (D) und von Autorisierungsdaten (DA) des Endgeräts (10);
- einen Schritt (500) des Erzeugens, durch das Authentifikationssystem (A), eines Sitzungsschlüssels, falls der Schritt (540) des Identifizierens des Endgeräts (10) erfolgreich ist, gefolgt von einem Schritt (550, 57) des Empfangens des Sitzungsschlüssels durch das Endgerät (10);
- einen Schritt (560) des Erzeugens, durch den Server (RI), eines Rechtsobjekts (RO), das durch Mittel separat von dem Sitzungsschlüssel geschützt wird, wobei das Rechtsobjekt (RO) Nutzungsrechte enthält, die die anhand der Identifikationsdaten (D) identifizierten Eigenschaften des Endgeräts (10) berücksichtigen;
- einen Schritt (57) des Kommunizierens zwischen dem Endgerät (10) und dem genannten Server (RI), bei dem der Server (RI) das Rechtsobjekt (RO) zum Endgerät (10) liefert;
- einen Schritt (580) des Zugreifens auf die Einrichtung (20) durch das Endgerät (10) durch Nutzen einerseits des vom Authentifikationssystem (A) erzeugten Sitzungsschlüssels und andererseits der in dem vom Server (RI) gelieferten Rechtsobjekt (RO) enthaltenen Nutzungsrechte.

3. Verfahren nach Anspruch 1 oder 2, das einen Schritt des Speicherns von Daten (D) zum Identifizieren des Endgeräts (10) in dem Speichermittel (4) umfasst, das dem Authentifikationssystem (A) zur Verfügung steht.

4. Verfahren nach Anspruch 2 oder 3, wobei der Schritt (560) des Erzeugens eines Rechtsobjekts (RO) durch den Server (RI) gemäß den DRM-Spezifikationen der Norm OMA V2 erfolgt.

5. Verfahren nach einem der Ansprüche 2 bis 4, bei dem auf den genannten Schritt (540) des Identifizierens des Endgeräts (10) ein Schritt (55) des Kommunizierens zwischen dem Authentifikationssystem (A) und dem genannten Server (RI) folgt, bei dem das Authentifikationssystem (A) eine eindeutige Kennung für die Verbindung mit dem Endgerät (10) zum Server (RI)sendet.

6. Verfahren nach einem der Ansprüche 2 bis 5, bei dem der genannte Schritt (57) des Kommunizierens zwischen dem Endgerät (10) und dem genannten Server (RI) durch einen Anforderungsschritt (56) des Endgeräts (10) beim Server (RI) eingeleitet wird, um ein Rechtsobjekt (RO) einzuholen, das durch eine Verschlüsselung geschützt ist, deren Schlüssel mit dem Endgerät (10) assoziiert ist.

7. Verfahren nach einem der Ansprüche 2 bis 5, bei dem der genannte Schritt (57) des Kommunizierens zwischen dem Endgerät (10) und dem genannten Server (RI) unilateral von dem Server (RI) eingeleitet wird, um ein geschütztes und mit dem Endgerät assoziiertes Rechtsobjekt (RO) zu liefern.

8. Verfahren nach einem der Ansprüche 2 bis 5, bei dem der genannte Schritt (550) des Kommunizierens zwischen dem Endgerät (10) und dem genannten Authentifikationsserver (A) durch einen Anforderungsschritt (53) des Endgeräts (10) beim Authentifikationsserver (A) eingeleitet wird.

9. Verfahren nach einem der Ansprüche 2 bis 5, bei dem der genannte Schritt (550) des Kommunizierens zwischen dem Endgerät (10) und dem genannten Authentifikationsserver (A) unilateral vom Authentifikationsserver (A) eingeleitet wird, um ein verschlüsseltes Objekt (DCF) zum Endgerät zu liefern.

10. Verfahren nach einem der Ansprüche 2 bis 5, bei dem der Schritt des Kommunizierens zwischen dem Endgerät (10) und einem DRM-Proxy-Server (P) durch einen Anforderungsschritt (53) des Endgeräts (10) beim DRM-Proxy-Server (P) eingeleitet wird.

11. Verfahren nach einem der Ansprüche 2 bis 5, bei dem der Schritt des Kommunizierens zwischen dem Endgerät (10) und dem genannten DRM-Proxy-Server (P) unilateral durch den DRM-Proxy-Server (P) eingeleitet wird, um ein verschlüsseltes Objekt (DCF) und ein Rechtsobjekt (RO) zu liefern.

12. Verfahren nach einem der Ansprüche 1 bis 11, das einen Schritt (58) des Entschlüsselns des Rechtsobjekts (RO) und des verschlüsselten Objekts (DCF) beim Endgerät (10) durch ein kryptografisches Modul (12) des vom Server (RI) während des Registrierungsschrittes (50) identifiziert Endgeräts (10) umfasst.

13. Verfahren nach einem der Ansprüche 1 bis 11, das einen Schritt (55) des Kommunizierens zwischen dem Authentifikationssystem (A) und dem genannten Server (RI) umfasst, bei dem das Authentifikationssystem (A) wenigstens einen Ver-/Entschlüsselungsschlüssel (6) zum Server (RI) sendet.

14. Verfahren nach einem der Ansprüche 2 bis 10, bei dem das vom Authentifikationsserver (A) gelieferte verschlüsselte Objekt (DCF) und das vom Server (RI) gelieferte Rechtsobjekt (RO) vom Endgerät (10) empfangen und von einem DRM-Agenten bearbeitet werden, wobei der Schritt (580) des Zugreifens auf die Einrichtung (20) nach einer Entschlüsselung des verschlüsselten Objekts (DCF) unter Nutzung des mit dem Endgerät assoziierten Rechtsobjekts und unter Nutzung eines Verbindungsmoduls des Endgeräts (10) ausgeführt wird, um sich bei der Einrichtung (20) zu authentifizieren.

15. Verfahren nach einem der Ansprüche 2 bis 11, bei dem der Authentifikationsserver (A) wenigstens einen Ver-/Entschlüsselungsschlüssel (6) in das zum Endgerät (10) gelieferte verschlüsselte Objekt (DCF) einfügt.

16. Verfahren nach Anspruch 15, bei dem das Authentifikationssystem (A) eine URL-Adresse eines sekundären Servers, der den Sitzungsschlüssel tragende Objekte im DCF-Format liefert, zu der Einrichtung (20) sendet, so dass ein Verbindungsmodul des Endgeräts (10) das den Sitzungsschlüssel tragende Objekt im DCF-Format bei diesem sekundären Server anfordern kann, das dem Endgerät (10) den Zugriff auf die Einrichtung (20) gewährt, wobei der Sitzungsschlüssel am Endgerät (10) nach der Nutzung durch einen DRM-Agenten des Endgeräts (10) des Ver- /Entschlüsselungsschlüssels (6) unverschlüsselt zurückgewonnen wird.

17. Verfahren nach einem der Ansprüche 1 bis 16, bei dem das Authentifikationssystem (A) eine URL-Adresse des Servers (RI) zur Einrichtung (20) sendet, um es dem Endgerät (10) zu gestatten, den genannten Registrierschritt (50) bei einer Verbindungsanforderung bei der Einrichtung (20) anhand dieser URL-Adresse auszuführen.

18. Verfahren nach einem der Ansprüche 2 bis 17, bei dem das Endgerät (10) mit dem Rechtsobjekt (RO) von von Nutzungsmodalitäten des Sitzungsschlüssels Vorgabedaten einer Gültigkeitsdauer des Sitzungsschlüssels empfängt.

19. Verfahren nach einem der Ansprüche 2 bis 18, bei dem das Endgerät (10) mit dem Rechtsobjekt (RO) von Nutzungsmodalitäten des Sitzungsschlüssels Vorgabedaten einer Grenze der Nutzungshäufigkeit des Sitzungsschlüssels empfängt.

20. Verfahren nach einem der Ansprüche 2 bis 14, bei dem der Authentifikationsserver (A) die Eigenschaften des Endgeräts (10) beim Schritt (500) des Erzeugens des verschlüsselten Objekts (DCF) wiederherstellt, um in dem verschlüsselten Objekt (DCF) einen für die Einrichtung (20) und für das Endgerät (10) geeignetsten Sitzungstyp zu ermitteln und anzuzeigen.

21. Verfahren nach einem der Ansprüche 2 bis 20, bei dem der Schritt (540) des Identifizierens bei einem Authentifikationssystem (A) erfolgt, das sich am selben Ort befindet wie der Server (RI).

22. Verfahren nach einem der Ansprüche 2 bis 20, bei dem der Schritt (540) des Identifizierens bei einem Authentifikationssystem (A) durchgeführt wird, das sich am selben Ort wie die Einrichtung (20) befindet.

23. Verfahren nach einem der Ansprüche 1 bis 22, das einen Schritt des Anschließens des Endgeräts (10) und eines Anschlussgehäuses am Netz (N) oder einem anderen Endgerät, das mit dem Netz (N) kommuniziert, um so mehrere Endgeräte in Bereichen zusammenzufassen, und einen Schritt des Unterteilens des vom Authentifikationssystem (A) erzeugten verschlüsselten Objekts (DCF) und seiner Nutzungsmodalitäten umfasst, die in dem Rechtsobjekt (RO) enthalten sind.

24. Verfahren nach Anspruch 1, **dadurch gekennzeichnet, dass** der Identifikationsschritt die folgenden Schritte umfasst:
- Liefern und Senden von Identifikationsdaten (D), um es zu ermöglichen, dass sich das Endgerät (10) bei einem Authentifikationssystem des Netzes (N) identifiziert,
- Extrahieren, aus über das Netz (N) empfangenen Daten, von wenigstens einem durch das Authentifikationssystem erzeugten Geheimnis mit Hilfe des DRM-Agenten.

25. Verfahren nach Anspruch 1, **dadurch gekennzeichnet, dass** der Schritt des Ausgebens eines Geheimnisses die folgenden Schritte umfasst:
- Empfangen eines Rechtsobjekts (RO), das von einem Server (RI) zum Verteilen von geschützten Verteilungsrechten ausgegeben wurde,
- Auslösen einer Entschlüsselung des verschlüsselten Objekts (DCF) durch einen DRM-Agenten mit Hilfe des Rechtsobjekts (RO).

26. Verfahren nach Anspruch 1, **dadurch gekennzeichnet, dass** der Schritt des Sendens von Nutzungsrechten die folgenden Schritte umfasst:
- Empfangen eines Rechtsobjekts (RO), das von einem Server (RI) zum Verteilen von geschützten Nutzungsrechten ausgegeben wurde,
- Extrahieren von Nutzungsrechten aus dem verschlüsselten Objekt (DCF), die Genehmigungen zum Zugreifen auf eine Einrichtung (20) des Netzes (N) umfassen.

27. Computerprogramm, das direkt in einen internen Speicher einer digitalen Verarbeitungseinheit geladen werden kann, das sich in einem Funkkommunikationsendgerät (10) zum Kommunizieren mit einem Funktelefonienetz (N) befindet, wobei das Endgerät Mittel (11) zum Speichern von Identifikationsdaten (D) des Endgeräts (10) umfasst, **dadurch gekennzeichnet, dass** es Software-Code zum Ausführen der Schritte des Verfahrens nach Anspruch 1 umfasst, wenn das genannte Programm von der digitalen Verarbeitungseinheit abgearbeitet wird.
